# FASCICULE DE BREVET EUROPEEN

(11) **EP 0 706 249 B1**
(45) Date de publication et mention de la délivrance du brevet: **22.04.1998**
(21) Numéro de dépôt: 95402190.3
(22) Date de dépôt: 29.09.1995
(51) Int. Cl.: H02G 3/12

(54) **Perfectionnements aux embases de fixation d'appareillages sur les supports de câbles**
Verbesserungen an Geräteträger-Elementen für Kabelhalter
Improvement to holders for fastening apparatus on cable supports

(30) Priorité: 04.10.1994 FR 9411845
(43) Date de publication de la demande: 10.04.1996
(73) Titulaire: CONSTRUCTIONS ELECTRIQUES DE LA SEINE, 92130 Issy les Moulineaux (FR)
(72) Inventeur: Dufourg, Bernard, F-75006 Paris (FR)
(74) Mandataire: Burbaud, Eric

(56) Documents cités:
- FR-A- 2 151 483
- FR-A- 2 390 073
- FR-A- 2 689 605

## Description

L'invention est relative aux dispositifs pour supporter et guider les câbles électriques et analogues et elle vise plus particulièrement, parmi ces dispositifs, dits "supports" dans la suite, ceux du type des goulottes qui comprennent, d'une part, une gouttière constituée par un profilé en U et, d'autre part, un couvercle propre à fermer cette gouttière de façon amovible (voir FR-A-2 390 073).

Elle vise plus particulièrement, parmi les supports du genre en question, ceux pour lesquels chacune des deux ailes de la gouttière présente un ressaut faisant saillie intérieurement et constitué de préférence par un pan de ladite aile replié selon une droite s'étendant selon la direction longitudinale de la gouttière : de tels ressauts présentent plusieurs avantages, en particulier celui de raidir les ailes dans lesquelles ils sont pratiqués et celui de faciliter l'accrochage des clips de fixation des couvercles (voir FR-A-2 151 483).

Un problème qui se pose lors de l'exploitation des supports du genre en question est celui de la connexion entre les câbles supportés par ceux-ci et les appareillages de desserte de ces câbles, appareillages de toute nature désirable qui peuvent être symbolisés par les prises de courant électrique.

Dans les solutions connues, le montage de ces appareillages sur les supports considérés exige le recours à des socles intermédiaires fixés sur ces supports à l'aide notamment de systèmes boulons-écrous.

La mise en oeuvre de ces solutions est longue et coûteuse.

L'invention a pour but, surtout, de proposer, pour résoudre le problème de la fixation locale d'appareillages sur les supports ci-dessus, une solution qui présente de nombreux avantages par rapport à celles actuellement connues, en particulier au plan de la robustesse, de la simplicité du montage, de l'économie et même de l'esthétique.

A cet effet, pour monter un appareillage sur un support du genre en question, on a recours, conformément à l'invention, à une embase constituée par une plaque pliée comprenant un plateau central lui-même raccordé, directement ou non, d'une part, à deux pattes parallèles longitudinales bordant latéralement ledit plateau, chaque patte prolongeant une portion coudée propre à s'accrocher sur les ressauts du support, et d'autre part, à deux oreilles plates s'étendant sur la largeur de la gouttière, parallèlement à la direction longitudinale de celle-ci, oreilles propres à recouvrir jointivement des extrémités adjacentes de couvercles constitutifs du support, l'écartement mutuel des pattes de l'embase étant à la fois légèrement inférieur à l'écartement mutuel des portions, des ailes du support, qui prolongent les ressauts de ces ailes vers le fond de ce support et supérieur à l'écartement mutuel des sommets en regard desdits ressauts.

Dans des modes de réalisation avantageux, on a recours en outre l'une et/ou à l'autre des dispositions suivantes :
- le plateau central de l'embase est plat et rectangulaire,
- dans une embase selon l'alinéa précédent, les bords longitudinaux du plateau sont directement prolongés latéralement par les portions coudées de raccordement des pattes et ses bords transversaux sont raccordés aux oreilles par des panneaux inclinés à la fois sur le plateau et sur les oreilles,
- l'angle d'inclinaison de chaque panneau sur le plateau et sur les oreilles est de l'ordre de 45°,
- la hauteur de chaque patte est très inférieure à la hauteur de la base, de chaque aile du support, comprise entre le fond de ce support et le ressaut de cette aile.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

La figure 1, de ces dessins, montre en coupe transversale selon I-I, figure 2, un support de câble équipé d'une embase de fixation d'appareillage conforme à l'invention.

La figure 2 montre le même ensemble avec sa portion de gauche en vue latérale et sa portion de droite en coupe selon II-II, figure 1.

La figure 3 est une vue du même ensemble selon la flèche III de la figure 1, avec son extrémité de gauche équipée d'un bout de couvercle et son extrémité de droite dépourvue de tout couvercle.

La figure 4 est une vue semblable à la figure 1 montrant l'embase en cours de montage dans le support.

La figure 5 est une vue en perspective partielle d'un détail connu en soi de l'ensemble ci-dessus.

La figure 6 montre en perspective une variante d'embase de fixation d'appareillage susceptible de remplacer l'embase ci-dessus et également conforme à l'invention.

Le support de câble que l'on se propose d'équiper ici et une "goulotte" comprenant :
- une gouttière 1 constituée par un profilé métallique en U destiné à supporter et guider des câbles 2 qui peuvent être de toute nature désirable et qui sont de préférence des câbles électriques,
- et un couvercle plat 3 recouvrant la gouttière 1 et la refermant d'une façon en général amovible.

Pour simplifier la description, on supposera dans la suite que le fond 4 de la gouttière 1 est horizontal et que ses ailes 5 sont verticales et s'étendent vers le haut.

Cette hypothèse est bien entendu indiquée à titre purement illustratif, car la goulotte obtenue peut parfaitement être orientée différemment, et même présenter sa dimension longitudinale verticale, comme il peut être avantageux pour les tronçons affectés à des raccordements électriques entre les câbles supportés et des circuits extérieurs.

Chaque aile 5 présente à un niveau intermédiaire de sa hauteur un décrochement vers l'intérieur formant un ressaut ou redan 6.

Ce décrochement est avantageusement créé par pliage de l'aile 5 vers l'intérieur autour d'une droite L s'étendant selon la direction longitudinale de la goulotte, ladite droite délimitant supérieurement une portion inférieure ou base 7 de ladite aile 5.

Dans le mode de réalisation illustré, le redan 6 est prolongé vers le haut par la portion verticale restante 8 de l'aile 5, laquelle portion est décalée vers l'intérieur de la goulotte d'une distance égale à la saillie R du redan.

Ladite portion 8 s'achève à son sommet par un rebord 9 rabattu à 180° vers l'extérieur de la gouttière.

D'une façon connue en soi, le couvercle 3 est constitué par un plateau central 10 bordé latéralement par deux rigoles renversées 11 s'étendant longitudinalement et propres à coiffer chacune un bord rabattu 9 de la gouttière.

La fixation amovible du couvercle 3 sur la gouttière 1 est effectuée de toute façon désirable.

Dans le mode de réalisation illustré, cette fixation est assurée à l'aide d'attaches, ou clips, 12 constituées chacune par une lame métallique pliée (figure 5) facile à actionner aussi bien pour le montage que pour le démontage.

Une telle attache a été décrite dans le brevet FR-A-2 689 605.

C'est sur la goulotte ainsi décrite que l'on se propose de monter localement des appareillages électriques de toutes natures désirables et qui seront symbolisés aux fins de simplification dans la suite de la description par une prise de courant électrique 13.

A cet effet, on a recours ici à une embase 14 constituée par une plaque pliée, de préférence en métal, qui peut être substituée très facilement à une partie du couvercle 3.

Cette embase 14 comprend un plateau central 15 de forme générale rectangulaire.

Les deux bords longitudinaux de ce plateau 15 sont prolongés par deux pattes 16 verticales, également rectangulaires, par l'intermédiaire de raccords coudés 17.

Les pattes 16 et les raccords coudés 17 sont dessinés et dimensionnés de façon telle que, à la fin du montage de l'embase 14 dans une gouttière 1, lesdites pattes 16 longent intérieurement les bases 7 des ailes 5 alors que les zones coudées 17 sont disposées verticalement au-dessous des redans 6, ce qui rend impossible tout déboîtement de l'embase 14 vers le haut.

Pour ce qui est des bords transversaux du plateau 15, chacun d'eux est raccordé à une oreille horizontale et plate 18 propre à recouvrir jointivement un bord adjacent d'un couvercle 3.

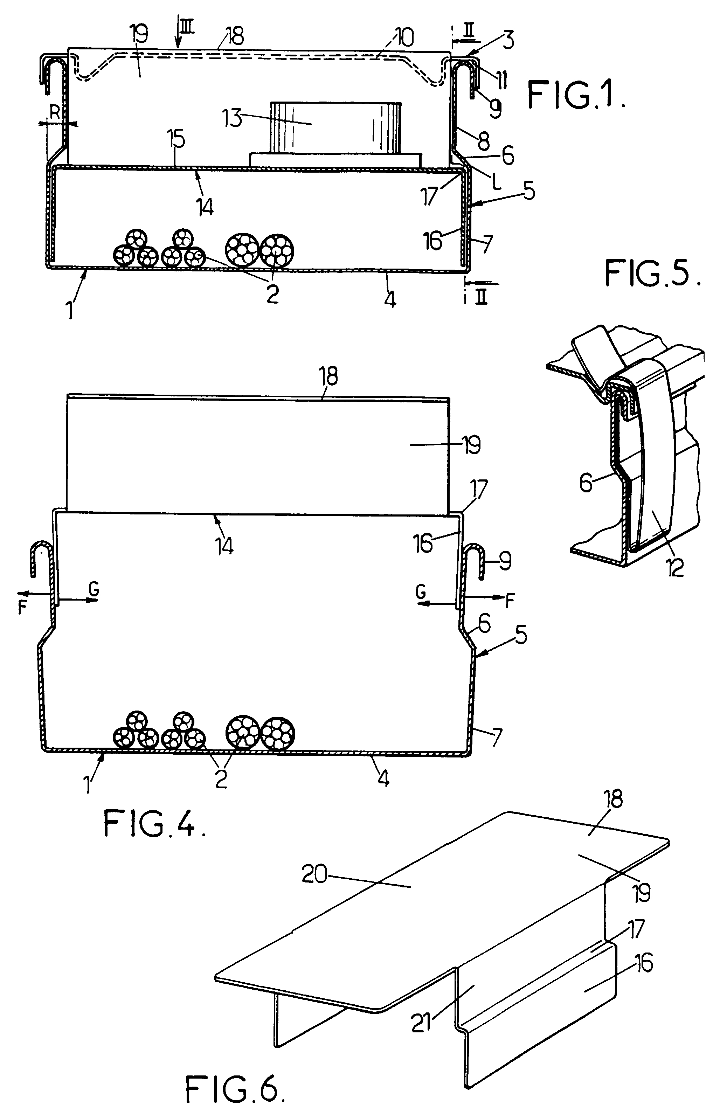

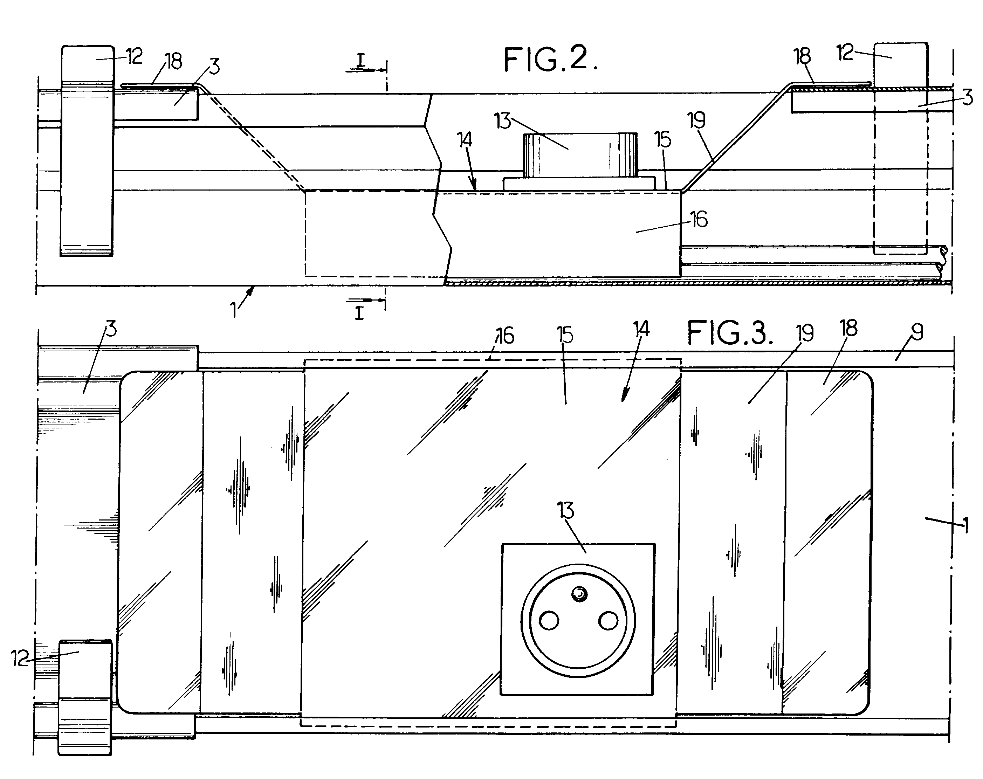

Dans le mode de réalisation des figures 1 à 4, chaque oreille 18 est raccordée au plateau 15 par l'intermédiaire d'un panneau 19 incliné à la fois sur ce plateau et sur cette oreille.

L'angle d'inclinaison du panneau 19 sur le plateau 15 est notamment de l'ordre de 45°, ainsi qu'illustré.

Mais il pourrait également être plus faible ou au contraire plus élevé et même atteindre 90°.

C'est de préférence sur le plateau 15 que sont montés les appareillages 13 de toute façon désirable, par exemple par collage, soudure, boulonnage, etc.

Pour monter l'embase 14 sur la goulotte 1, 3, on procède comme suit.

Initialement, les couvercles 3 sont dégagés.

Les portions supérieures 8 à bords recourbés 9 des deux ailes 5 peuvent donc s'écarter légèrement l'une de l'autre, élastiquement, selon les flèches F.

De même, les bases des pattes 16 peuvent se rapprocher légèrement, élastiquement, l'une de l'autre selon les flèches G.

En mettant en oeuvre cette double déformation, on peut introduire les bases des pattes 16 entre les faces internes des deux portions supérieures 8 des ailes 5 de la goulotte, puis repousser verticalement l'embase dans la goulotte en faisant glisser les unes sur les autres les portées métalliques en contact qui viennent d'être définies.

Cette poussée se traduit par un écartement progressif des portions supérieures 8 des ailes 5, et ce jusqu'à ce que les zones coudées 17 parviennent au niveau des redans 6.

On observe alors un rapprochement mutuel brusque des deux ailes selon un mouvement de déclic élastique qui se traduit par l'emprisonnement des pattes 16 et de leurs coudes 17 à l'intérieur de la gouttière.

Lorsque cet emprisonnement par déclic est réalisé, les oreilles 18 s'étendent en travers de la gouttière, sensiblement au niveau des sommets de ses bords rabattus 9.

Il suffit alors de les soulever légèrement pour introduire longitudinalement entre celles-ci et lesdits sommets les extrémités adjacentes des couvercles 3.

L'ensemble est avantageusement dimensionné de façon telle que ces légers soulèvements aient pour effet d'appliquer verticalement les coudes 17 contre les redans 6, ce qui supprime tous les jeux verticaux du montage.

Pour ce qui est des jeux horizontaux dans le sens longitudinal, ils sont également supprimés en faisant glisser les bouts de couvercle 3 sous les oreilles 18 jusqu'au contact de ces bouts de couvercle avec les panneaux 19, puis en bloquant les couvercles en leur position finale de butée par mise en place des attaches 12.

Il est à noter que la simple pose des couvercles 3 près des extrémités longitudinales de l'embase rend impossible tout nouvel écartement mutuel des deux ailes 5 de la gouttière et donc tout dégagement de l'embase hors de celle-ci.

Dans ces conditions, l'embase 14 est solidement fixée, sans aucun jeu de montage, sur la goulotte.

Il est à noter que cette fixation est obtenue sans qu'il soit nécessaire de recourir à un quelconque outil extérieur tel qu'une clé ou qu'un tournevis.

Il est à noter aussi que le montage obtenu est réversible : pour démonter l'embase, il suffit de dégager les couvercles 3 par coulissement longitudinal de ceux-ci, après ouverture des attaches 12 ; un tel dégagement rend à nouveau possible un écartement élastique mutuel des deux ailes 5 de la gouttière, et par suite un enlèvement de l'embase hors de la gouttière moyennant les déplacements relatifs mutuels inverses de ceux observés au cours du montage.

En suite de quoi, et quel que soit le mode de réalisation adopté, on obtient finalement des embases se prêtant à la fixation d'appareillages, susceptibles d'être très facilement montées sur les supports de câbles du type des goulottes, embases dont la constitution et la mise en oeuvre résultent suffisamment de ce qui précède.

Ces embases présentent de nombreux avantages par rapport à celles antérieurement connues, en particulier les suivants :
- leurs montages et démontages sont particulièrement simples, n'exigeant le recours à aucun outil spécial,
- ces embases sont particulièrement robustes et leur fixation sur les goulottes sont extrêmement solides et fiables,
- les ensembles obtenus, qui ne comportent aucun système boulon-écrou de fixation, présentent un aspect esthétique indéniable : en particulier, la tôle constitutive des embases considérées peut être peinte en toute couleur désirable.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où le plateau central de l'embase 14 ne serait pas disposé au niveau même des zones coudées 17 de raccordement des pattes 16 à ce plateau, mais serait disposé au niveau du sommet des bords repliés 9 des ailes 5 : dans ce cas, illustré sur la figure 6, le plateau central, visible en 20, serait directement prolongé longitudinalement par les panneaux 19 et les oreilles 18 qui seraient alors coplanaires avec lui, formant avec lui un grand rectangle, et ses bords longitudinaux latéraux seraient raccordés aux zones coudées 17 par des pans verticaux 21 propres à longer jointivement les faces intérieures des portions supérieures 8 des ailes 5,
- celles où les redans 6, au lieu d'être prolongés vers le haut par des portions d'ailes 8 décalées horizontalement par rapport aux portions d'ailes inférieures 7, formeraient chacun la moitié inférieure d'une simple nervure rentrante, les moitiés supérieures de ces nervures étant alors prolongées supérieurement par des portions d'ailes se trouvant verticalement dans les mêmes plans que les portions d'ailes inférieures,
- celles où la hauteur des pattes 16 serait très inférieure à la hauteur des portions inférieures 7 d'ailes qu'elles longent intérieurement, ce qui permettrait à la fois de réduire le poids du métal nécessaire pour constituer l'embase correspondante et de réserver plus de place pour les câbles à l'intérieur des goulottes équipées de telles embases,
- celles où les pattes longitudinales 16, au lieu d'être plates comme dans l'exemple ci-dessus décrit et illustré, seraient constituées par des rebords roulés du plateau 15,
- et celles où la plaque formant l'embase ne serait pas constituée en métal, c'est-à-dire une tôle pliée, mais serait constituée en un autre matériau de résistance et longévité comparables à celles des métaux, matériau tel qu'une matière plastique, renforcée ou non, ou qu'un composite.

## Revendications

1. Embase pour la fixation d'appareillages sur un support de câbles composé d'une gouttière (1) en U et d'un couvercle amovible (3), chacune des deux ailes (5) de la gouttière comportant un ressaut (6) faisant saillie intérieurement, caractérisée en ce qu'elle est constituée par une plaque pliée et comprend un plateau central (15) lui-même raccordé, directement ou non, d'une part, à deux pattes parallèles longitudinales (16) bordant latéralement ledit plateau, chaque patte prolongeant une portion coudée (17) propre à s'accrocher sur les ressauts (6) du support, et d'autre part, à deux oreilles (18) plates s'étendant sur la largeur de la gouttière, parallèlement à la direction longitudinale de celle-ci, oreilles propres à recouvrir jointivement des extrémités adjacentes de couvercles constitutifs du support, l'écartement mutuel des pattes (16) de l'embase étant à la fois légèrement inférieur à l'écartement mutuel des portions, des ailes du support, qui prolongent les ressauts de ces ailes vers le fond de ce support et supérieur à l'écartement mutuel des sommets en regard desdits ressauts.

2. Embase selon la revendication 1, caractérisée en ce que le plateau central (15) de l'embase est plat et rectangulaire.

3. Embase selon la revendication 2, caractérisée en ce que les bords longitudinaux du plateau (15) sont directement prolongés latéralement par les portions coudées (17) de raccordement des pattes (16) et en ce que ses bords transversaux sont raccordés aux oreilles (18) par des panneaux (19) inclinés à la fois sur le plateau et sur les oreilles.

4. Embase selon la revendication 3, caractérisée en ce que l'angle d'inclinaison de chaque panneau (19) sur le plateau (15) et sur les oreilles (18) est de l'ordre de 45°.

5. Embase selon l'une quelconque des précédentes revendications, caractérisée en ce que la hauteur de chaque patte (16) est très inférieure à la hauteur de la base, de chaque aile (5) du support, comprise entre le fond de ce support et le ressaut (6) de cette aile.

## Patentansprüche

1. Sockel für die Befestigung von Geräten über einem Kabelhalter, mit einem U-förmigen Schacht (1) und einer abnehmbaren Abdeckung (3), wobei jeder der beiden Schenkel (5) des Schachtes einen nach innen springenden Absatz (6) aufweist, dadurch gekennzeichnet, daß dieser aus einer gebogenen Platte besteht und eine zentrale Fläche (15) umfaßt, die selbst direkt oder indirekt verbunden ist einerseits mit zwei längsparallelen, die Fläche seitlich begrenzenden Bändern (16), wobei jedes Band einen gekrümmten Abschnitt (17) verlängert, derart, daß sich dieser an den Absätzen (6) des Halters festhakt, und andererseits mit zwei glatten Ansätzen (18), die sich über die Breite des Schachtes erstrecken, parallel zur Längsrichtung desselben, wobei die Ansätze geeignet sind, die benachbarten Enden der wesentlichen Abdeckungen des Halters in anstoßender Weise zu übergreifen, wobei der gegenseitige Abstand der Bänder (16) des Sockels zugleich ein wenig kleiner als der gegenseitige Abstand der Abschnitte der Schenkel des Halters ist, die die Absätze dieser Schenkel zum Boden des Trägers hin verlängern, und ein wenig größer als der gegenseitige Abstand der in bezug zu den Absätzen oberen Abschnitte.

2. Sockel nach Anspruch 1, dadurch gekennzeichnet, daß die zentrale Fläche (15) des Sockels eben und rechtwinklig ist.

3. Sockel nach Anspruch 2, dadurch gekennzeichnet, daß die Längsränder der Fläche (15) durch die mit den Bändern (16) verbundenen, gekrümmten Abschnitte (17) seitlich verlängert sind, und daß ihre Querränder mit den Ansätzen (18) durch Platten (19) verbunden sind, die zugleich schräg auf der Fläche und auf den Absätzen stehen.

4. Sockel nach Anspruch 3, dadurch gekennzeichnet, daß der Neigungswinkel jeder Platte (19) auf der Fläche (15) und auf den Absätzen (18) etwa 45° beträgt.

5. Sockel nach einem der vorstehenden Ansprüche, dadurch gekennzeichnet, daß die Höhe jedes Bandes (16) sehr viel kleiner als die Höhe der Basis jedes Schenkels (5) des Trägers ist, der zwischen dem Boden des Trägers und dem Absatz (6) jedes Schenkels liegt.

## Claims

1. A base for fixing equipment on a cable support comprising a U-shaped channel (1) and a detachable lid (3), each of the two sides (5) of the channel comprising an internally projecting shoulder (6), characterised in that it is formed by a bent plate and comprises a central plate (15) in turn connected, directly or otherwise, on the one hand, to two longitudinal parallel flaps (16) laterally flanking the said plate, each flap continuing a bent portion (17) adapted to engage on the shoulders (6) of the support and, on the other hand, two flat flanges (18) extending over the width of the channel, parallel to the longitudinal direction thereof, said flanges being adapted to overlap contiguously adjacent ends of lids forming part of the support, the mutual spacing of the flaps (16) of the base being both slightly less than the mutual spacing of the portions of the sides of the support which continue the shoulders of said sides towards the base of said support, and greater than the mutual spacing of the facing tops of the said shoulders.

2. A base according to claim 1, characterised in that the central plate (15) of the base is flat and rectangular.

3. A base according to claim 2, characterised in that the longitudinal edges of the plate (15) are directly continued laterally by the bent connecting portions (17) of the flaps (16) and in that its transverse edges are connected to the flanges (18) by panels (19) inclined both to the plate and to the flanges.

4. A base according to claim 3, characterised in that the angle of inclination of each panel (19) to the plate (15) and to the flanges (18) is of the order of 45°.

5. A base according to any one of the preceding claims, characterised in that the height of each flap (16) is very much less than the height of the base, of each side (5) of the support, contained between the base of said support and the shoulder (6) of said side.
